# EUROPEAN PATENT SPECIFICATION

(11) **EP 1 777 627 B1**
(45) Date of publication and mention of the grant of the patent: **07.03.2012**
(21) Application number: 05022398.1
(22) Date of filing: 13.10.2005
(51) Int. Cl.: G06F 12/02

(54) **Data storage methods and systems for use on a mobile device**
Verfahren und Systeme zur Datenspeicherung für eine mobile Vorrichtung
Procédés et systèmes de stockage de données pour dispositif portable

(43) Date of publication of application: 25.04.2007
(73) Proprietor: RESEARCH IN MOTION LIMITED, Waterloo, Ontario N2L 3W8 (CA)
(72) Inventor: Dahms, John F.A., Ontario N2K 2N1 (CA); Scian, Anthony F., Ontario N2T 2N6 (CA); Carmody, Michael J., Ontario N2L 3T7 (CA)
(74) Representative: MERH-IP Matias Erny Reichl Hoffmann

(56) References cited:
- US-B1- 6 412 080
- US-B1- 6 839 823

## Description

### BACKGROUND

### Technical Field

This disclosure relates generally to mobile device operations, and in particular, to handling data storage operations involving a mobile device.

### Description of the Related Art

Mobile devices (e.g., personal digital assistants (PDAs), cellular phones, mobile messaging devices, etc.) frequently perform data storage operations in order to store data used on a mobile device. The data to be stored can be information from many different types of sources, such as from the user of the mobile device, software applications operating on or externally to the mobile device. Difficulties can arise in attempting to handle data storage operations in an efficient and robust manner. The difficulties are enhanced on a resource constrained device, such as a mobile device, where a traditional file system may be deemed as being too "heavyweight" for such a device.

US 6,839,823 B1 discloses the storage in a monolithic nonvolatile memory device. The nonvolatile memory comprises a plurality of individually erasable blocks. Data is stored in objects which are identified by object headers. Each block also has a block information structure. The block information structure maintains a logical block number and tracks the reclamation status for block. A data lookup table is built in RAM during initialization of the computer system and updated as appropriate during write and erase operations. The data lookup table provides a pointer to a particular block and offset associated with a selected header for data having a specified identifier.US 6,412,080 B1 discloses a nonvolatile flash store memory system, comprising sectors. Each sector begins with an EraseBlockHeader. If an invalid signature in an EraseBlockHeader is detected upon startup, the sector is erased and a valid signature is written to the EraseBlockHeader of the sector.

### SUMMARY

According to the present invention there is provided a system and a method for use with data operations with respect to a mobile communication device's memory as set forth in the claims.

### BRIEF DESCRIPTION OF THE DRAWINGS

FIG. 1 is a block diagram depicting a mobile device configured to handle data storage operations.
FIG. 2 is a block diagram illustrating a mobile device whose data store is divided into sectors.
FIG. 3 is a block diagram illustrating sectors containing structures for use in memory modification operations.
FIG. 4 is a block diagram illustrating different types of memory modification operations.
FIG. 5 is a flowchart depicting an operational scenario that involves a record creation operation.
FIG. 6 is a flowchart depicting an operational scenario that involves moving a record to a new sector.
FIG. 7 is a flowchart depicting an operational scenario that involves freeing a record.
FIG. 8 is a flowchart depicting an operational scenario that involves compacting a sector.
FIG. 9 is a flowchart depicting an operational scenario that involves erasing a sector.
FIG. 10 is a flowchart depicting an initialization operational scenario.
FIG. 11 is a block diagram of an example mobile device.
FIG. 12 is an overview of an example communication system in which a mobile device may be used.

### DETAILED DESCRIPTION

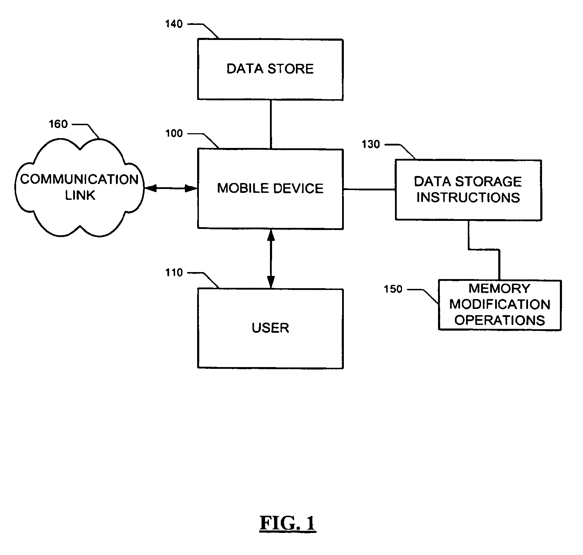

FIG. 1 depicts a mobile communications device 100 that is configured to store data generated from one or more sources in a data store 140. The sources can include a user 110 of the mobile device 100, software applications operating on the mobile device 100 or software applications operating externally from the mobile device 100, such as over a communication link 160 (e.g., a physical communication link, wireless communication networks, etc.).

The mobile device 100 includes data storage instructions 130 for handling data storage operations with respect to the data store 140, such as memory modification operations 150. Memory modification operations 150 performed by the data storage instructions 130 can be used by the mobile device 100 when data is created or modified in some manner with respect to the data store 140. Such operations can include data record creations, deletions, movements, etc. For example, in a mobile device address-book application, a user may add new contact data that needs to be stored in the data store 140. The memory modification operations 150 handle the writing of the new contact data to the data store 140.

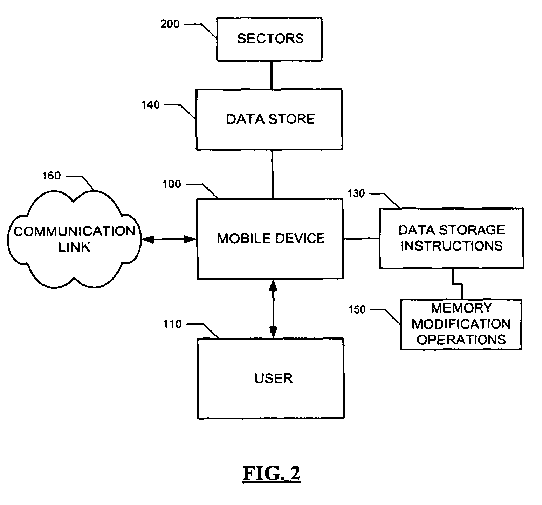

FIG. 2 illustrates a mobile device whose data store 140 contains sectors 200. Example of sector sizes are typically between 64K and 256K in size (but growing every year). An example of a data store that is divided into sectors is NOR flash memory. Flash memory (sometimes called "flash RAM") is a type of constantly-powered non-volatile memory that can be erased and reprogrammed in units of memory. NOR flash has a full address/data (memory) interface that allows random access to any location.

When a sector (also known as an "erase block") of NOR flash is "erased," its bits are all set to 1. Bits in NOR flash can only be changed from a 0-bit to a 1-bit by "erasing" a sector. This changes all of the bits in the sector from 0 to 1. Writes in NOR flash are typically performed as a bit-wise AND operation. Write granularity ranges between one bit, and one byte. A write operation can only change a 1-bit to a 0-bit. Bytes in flash which have never been modified from their "erased" state (0xFF) are collectively called "clean space".

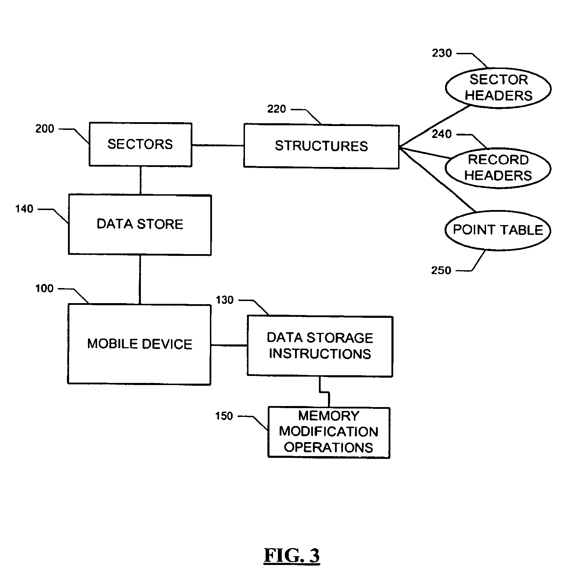

FIG. 3 illustrates sectors 200 of a data store 140 having structures 220 for use in memory modification operations 150. Structures 220 can include sector headers 230, record headers 240, and a point table 250. A sector header which appears at the beginning of a sector can contain the following:
* int signature;
* int version;
The signature field can be used to determine whether a sector contains valid data. For example, a sector can be deemed to contain valid data if and only if the signature is a certain number (e.g., 0xDA7ABA5E).

A record header follows a sector header and can contain the following:
* byte valid;
* byte freed;
* int recordSize;
* int recordHandle;
* byte data[ ... ];
Each record has a unique integer handle. A record is referenced by its handle. The flags "valid and freed" are considered "true" if their value is 0, otherwise they are considered false.

A point table is a data structure that maps record handles to flash addresses. This allows a record to be moved in flash, but maintain the same handle.

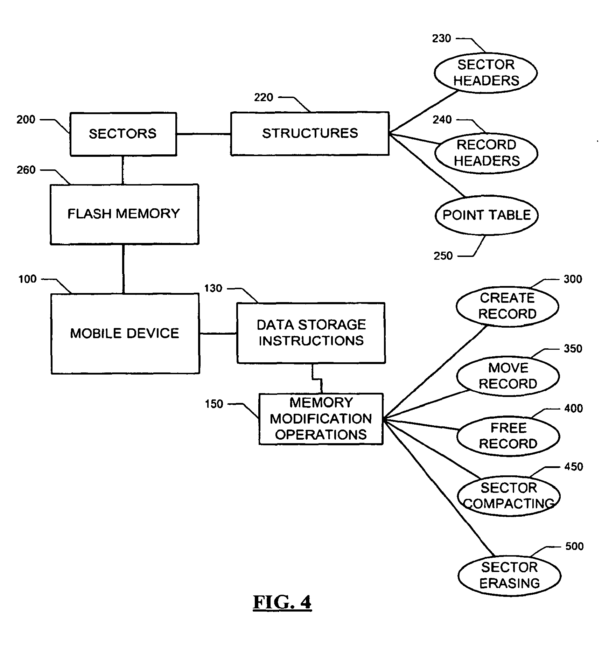

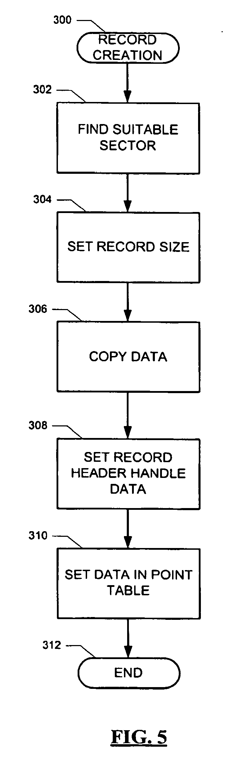

FIG. 4 illustrates in a non-limiting manner how memory modification operations 150 can include many different types of memory modification operations, such as record creation 300, record movement 350, freeing records 400, sector compacting 450, and sector erasing 500. These non-limiting examples of memory modification operations 150 are discussed in the flowcharts of FIGS. 5-9.

FIG. 5 depicts an operational scenario 300 that involves a record creation operation. With reference to FIG. 5, a suitable sector is located at step 302 for the record that is to be created. This can be done by finding a sector that has enough clean space for the new record. New records can be created after the end of the last valid record in the sector, in the clean space.

At step 304, the record size is set in the record header structure, such as by setting the RecordHeader.recordSize equal to the size of the record to be created. At step 306, the data is copied into the record header structure, such as by copying data into RecordHeader.data[]. At step 308, the handle of the record header structure is set, such as by setting RecordHeader.handle equal to nextHandle(). The valid flag of the record header structure is then set at step 310, such as by setting RecordHeader.valid equal to 0. The point table is updated to reflect this new mapping of the record handle to flash address, such as by associating PointTable[handle] to the RecordHeader. This scenario ends at end block 312.

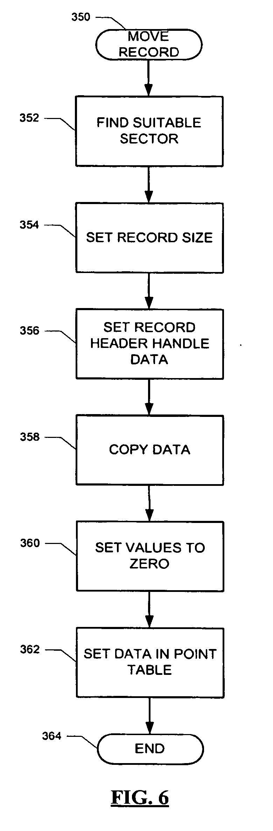

FIG. 6 depicts an operational scenario 350 that involves moving a record to a new sector. With reference to FIG. 6, a suitable sector is located at step 352. This can be done by finding a sector with enough clean space for a copy of the record. At step 354, the record size in the new record header structure is set, such as by setting the NewRecordHeader.recordSize to the OldRecordHeader,recordSize. At step 356, the handle of the new record header is set, such as by setting the NewRecordHeader.recordHandle to OldRecordHeader.recordHandle.

At step 358, data is copied from the old record header structure to the new record header structure, such as by copying data from OldRecordHeader.data[] to NewRecordHeader.data[]. At step 360, the NewRecordHeader.valid is set to 0, and the OldRecordHeader.freed is set to 0. The point table is updated at step 362 to reflect this new mapping of the record handle to flash address, such as by associating PointTable[handle] to the NewRecordHeader. This scenario ends at end block 364.

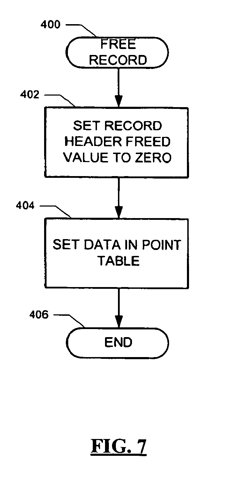

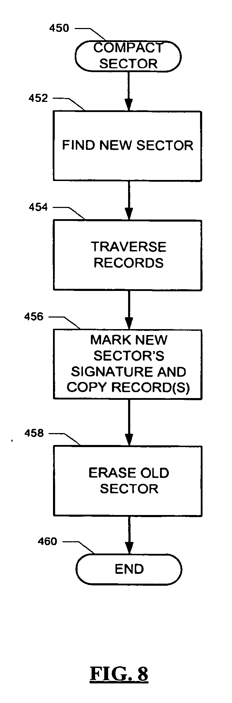

FIG. 7 depicts an operational scenario 400 that involves freeing a record. With reference to FIG. 7, the record header freed value is set to zero at step 402, such by setting RecordHeader.freed to 0. At step 404, the point table is updated to reflect this new mapping of the record handle to flash address, such as by associating PointTable[handle] to NULL (e.g., a value that can be used to distinguish a freed record pointer from any valid record pointer, commonly a pointer equal to zero). Reclaiming this space can be done through a sector compact operation (which is discussed in the flowchart of FIG. 8). This scenario ends at end block 406.

FIG. 8 depicts an operational scenario 450 that involves compacting a sector. With reference to FIG. 8, a new (e.g., entirely full of clean space) sector is located at step 452. At step 454, the records in the sector are traversed until encountering a RecordHeader with valid!=0. At step 456, the new sector's signature is marked as valid and the records are copied from the old sector to the new sector. At step 458, the old sector is erased. This scenario ends at end block 460.

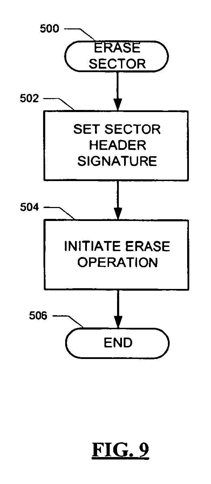

FIG. 9 depicts an operational scenario 500 that involves erasing a sector (e.g., resetting the entire sector to clean space). With reference to FIG. 9, the sector header signature value is set to an invalid value, such as by setting SectorHeader.signature to 0. At step 504, a sector erase operation is initiated that changes all sector 0's to 1's thus creating an entire sector of clean space.

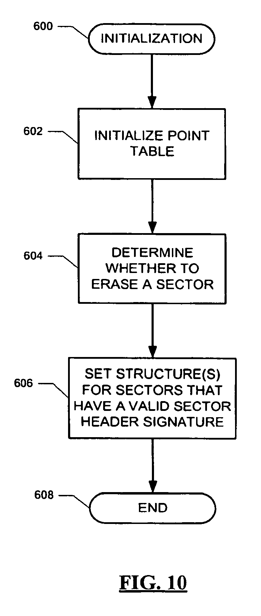

FIG. 10 is a flowchart depicting an initialization (e.g., recovery) operational scenario 600. With reference to FIG. 10, the point table is initialized at step 602. The point table can be initialized, such as setting PointTable[handle] to NULL for all handles.

At step 604, there is a determination as to whether to erase a sector. This can be accomplished as follows. For any sector that has an invalid SectorHeader.signature, such sectors are erased. This can be used to handle the case where an erase operation was initiated, but the erase did not finish.

For each sector with a valid SectorHeader.signature, the RecordHeaders are traversed in that sector until encountering the first record where RecordHeader.valid != 0. For each such RecordHeader found, if PointTable[RecordHeader.handle] == NULL, then set PointTable[RecordHeader.handle] equal to RecordHeader; else set RecordHeader.freed to 0. This can be used to handle the case where a record was being copied from one location to another when a reset has occurred.

For each sector that has a valid SectorHeader.signature, the RecordHeaders in that sector are traversed until encountering the first record where RecordHeader.valid != 0. For each RecordHeader found, if the field valid=0xFF, and another field != 0xFF, then this sector is compacted and the loop is exited. This cleans up any damage done when a record failed to be created properly.

These recovery steps as illustrated in FIG. 10 allow the data store to recover to a consistent state. For example, the data store recovers in a consistent state despite power failing part way through recovery because the recovery process itself uses the primitive operations described above (e.g., creating a record, moving a record, etc. as shown in FIG. 4) when it modifies flash.

The systems and methods disclosed herein are presented only by way of example and are not meant to limit the scope of the invention. Other variations of the systems and methods described above will be apparent to those skilled in the art and as such are considered to be within the scope of the invention.

As an example of the wide scope of the approaches described herein, a system and method can be configured as disclosed herein for use in data storage operations that are frequently being performed to store data on a mobile device. Such a system and method can store binary data records in flash memory in a robust and transactional manner. As an illustration, if power fails (e.g., a battery is removed) when the record is being written, the record can be recovered or discarded on startup. Also such a system and method can be used with limited overhead space, which is useful for a resource constrained device such as a mobile device.

As another example, a system and method can be configured as disclosed herein so as to achieve relocation of pointers to flash by tagging every record in the filesystem. When a record is moved, the tag allows the Java virtual machine that is operating on the mobile device to locate the correct pointer to the record and update it. This is an inverse of the scheme of searching for pointers to the relocated record.

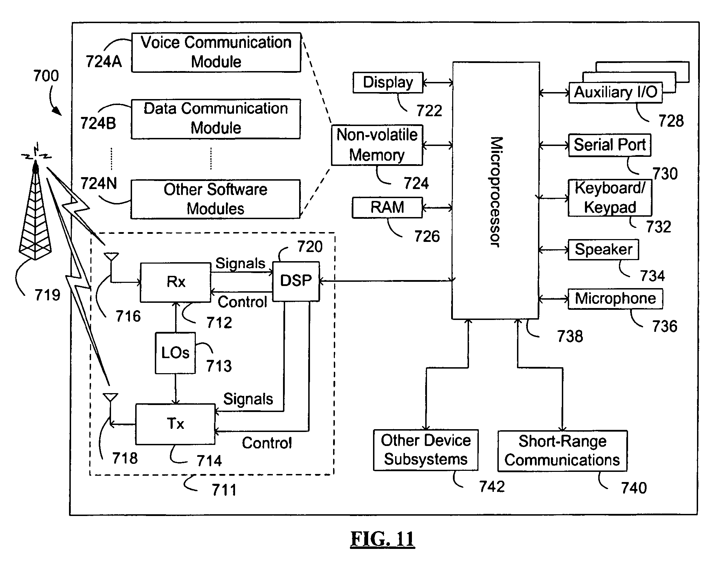

As yet another example, the systems and methods disclosed herein may be used with many different types of computers and devices, such as a wireless mobile communications device shown in FIG. 11. With reference to FIG. 11, the mobile device 700 is a dual-mode mobile device and includes a transceiver 711, a microprocessor 738, a display 722, non-volatile memory 724, random access memory (RAM) 726, one or more auxiliary input/output (I/O) devices 728, a serial port 730, a keyboard/keypad 732, a speaker 734, a microphone 736, a short-range wireless communications sub-system 740, and other device sub-systems 742.

The transceiver 711 includes a receiver 712, a transmitter 714, antennas 716 and 718, one or more local oscillators 713, and a digital signal processor (DSP) 720. The antennas 716 and 718 may be antenna elements of a multiple-element antenna, and are preferably embedded antennas. However, the systems and methods described herein are in no way restricted to a particular type of antenna, or even to wireless communication devices.

The mobile device 700 is preferably a two-way communication device having voice and data communication capabilities. Thus, for example, the mobile device 700 may communicate over a voice network, such as any of the analog or digital cellular networks, and may also communicate over a data network. The voice and data networks are depicted in FIG. 11 by the communication tower 719. These voice and data networks may be separate communication networks using separate infrastructure, such as base stations, network controllers, etc., or they may be integrated into a single wireless network.

The transceiver 711 is used to communicate with the network 719, and includes the receiver 712, the transmitter 714, the one or more local oscillators 713 and the DSP 720. The DSP 720 is used to send and receive signals to and from the transceivers 716 and 718, and also provides control information to the receiver 712 and the transmitter 714. If the voice and data communications occur at a single frequency, or closely-spaced sets of frequencies, then a single local oscillator 713 may be used in conjunction with the receiver 712 and the transmitter 714. Alternatively, if different frequencies are utilized for voice communications versus data communications for example, then a plurality of local oscillators 713 can be used to generate a plurality of frequencies corresponding to the voice and data networks 719. Information, which includes both voice and data information, is communicated to and from the transceiver 711 via a link between the DSP 720 and the microprocessor 738.

The detailed design of the transceiver 711, such as frequency band, component selection, power level, etc., will be dependent upon the communication network 719 in which the mobile device 700 is intended to operate. For example, a mobile device 100 intended to operate in a North American market may include a transceiver 711 designed to operate with any of a variety of voice communication networks, such as the Mobitex or DataTAC mobile data communication networks, AMPS, TDMA, CDMA, PCS, etc., whereas a mobile device 100 intended for use in Europe may be configured to operate with the GPRS data communication network and the GSM voice communication network. Other types of data and voice networks, both separate and integrated, may also be utilized with a mobile device 100.

Depending upon the type of network or networks 719, the access requirements for the mobile device 700 may also vary. For example, in the Mobitex and DataTAC data networks, mobile devices are registered on the network using a unique identification number associated with each mobile device. In GPRS data networks, however, network access is associated with a subscriber or user of a mobile device. A GPRS device typically requires a subscriber identity module ("SIM"), which is required in order to operate a mobile device on a GPRS network.

After any required network registration or activation procedures have been completed, the mobile device 700 may the send and receive communication signals, including both voice and data signals, over the networks 719. Signals received by the antenna 716 from the communication network 719 are routed to the receiver 712, which provides for signal amplification, frequency down conversion, filtering, channel selection, etc., and may also provide analog to digital conversion. Analog to digital conversion of the received signal allows more complex communication functions, such as digital demodulation and decoding to be performed using the DSP 720. In a similar manner, signals to be transmitted to the network 719 are processed, including modulation and encoding, for example, by the DSP 720 and are then provided to the transmitter 714 for digital to analog conversion, frequency up conversion, filtering, amplification and transmission to the communication network 719 via the antenna 718.

In addition to processing the communication signals, the DSP 720 also provides for transceiver control. For example, the gain levels applied to communication signals in the receiver 712 and the transmitter 714 may be adaptively controlled through automatic gain control algorithms implemented in the DSP 720. Other transceiver control algorithms could also be implemented in the DSP 720 in order to provide more sophisticated control of the transceiver 711.

The microprocessor 738 preferably manages and controls the overall operation of the mobile device 700. Many types of microprocessors or microcontrollers could be used here, or, alternatively, a single DSP 720 could be used to carry out the functions of the microprocessor 738. Low-level communication functions, including at least data and voice communications, are performed through the DSP 720 in the transceiver 711. Other, high-level communication applications, such as a voice communication application 724A, and a data communication application 724B may be stored in the non-volatile memory 724 for execution by the microprocessor 738. For example, the voice communication module 724A may provide a high-level user interface operable to transmit and receive voice calls between the mobile device 700 and a plurality of other voice or dual-mode devices via the network 719. Similarly, the data communication module 724B may provide a high-level user interface operable for sending and receiving data, such as e-mail messages, files, organizer information, short text messages, etc., between the mobile device 700 and a plurality of other data devices via the networks 719.

The microprocessor 738 also interacts with other device subsystems, such as the display 722, the RAM 726, the auxiliary input/output (I/O) subsystems 728, the serial port 730, the keyboard/keypad 732, the speaker 734, the microphone 736, the short-range communications subsystem 740 and any other device subsystems generally designated as 742.

Some of the subsystems shown in FIG. 11 perform communication-related functions, whereas other subsystems may provide "resident" or on-device functions. Notably, some subsystems, such as the keyboard/keypad 732 and the display 722 may be used for both communication-related functions, such as entering a text message for transmission over a data communication network, and device-resident functions such as a calculator or task list or other PDA type functions.

Operating system software used by the microprocessor 738 is preferably stored in a persistent store such as non-volatile memory 724. The non-volatile memory 724 may be implemented, for example, as a Flash memory component, or as battery backed-up RAM. In addition to the operating system, which controls low-level functions of the mobile device 710, the non-volatile memory 724 includes a plurality of software modules 724A-724N that can be executed by the microprocessor 738 (and/or the DSP 720), including a voice communication module 724A, a data communication module 724B, and a plurality of other operational modules 724N for carrying out a plurality of other functions. These modules are executed by the microprocessor 738 and provide a high-level interface between a user and the mobile device 700. This interface typically includes a graphical component provided through the display 722, and an input/output component provided through the auxiliary I/O 728, keyboard/keypad 732, speaker 734, and microphone 736. The operating system, specific device applications or modules, or parts thereof, may be temporarily loaded into a volatile store, such as RAM 726 for faster operation. Moreover, received communication signals may also be temporarily stored to RAM 726, before permanently writing them to a file system located in a persistent store such as the Flash memory 724.

An exemplary application module 724N that may be loaded onto the mobile device 700 is a personal information manager (PIM) application providing PDA functionality, such as calendar events, appointments, and task items. This module 724N may also interact with the voice communication module 724A for managing phone calls, voice mails, etc., and may also interact with the data communication module for managing e-mail communications and other data transmissions. Alternatively, all of the functionality of the voice communication module 724A and the data communication module 724B may be integrated into the PIM module.

The non-volatile memory 724 preferably also provides a file system to facilitate storage of PIM data items on the device. The PIM application preferably includes the ability to send and receive data items, either by itself, or in conjunction with the voice and data communication modules 724A, 724B, via the wireless networks 719. The PIM data items are preferably seamlessly integrated, synchronized and updated, via the wireless networks 719, with a corresponding set of data items stored or associated with a host computer system, thereby creating a mirrored system for data items associated with a particular user.

Context objects representing at least partially decoded data items, as well as fully decoded data items, are preferably stored on the mobile device 700 in a volatile and non-persistent store such as the RAM 726. Such information may instead be stored in the non-volatile memory 724, for example, when storage intervals are relatively short, such that the information is removed from memory soon after it is stored. However, storage of this information in the RAM 726 or another volatile and non-persistent store is preferred, in order to ensure that the information is erased from memory when the mobile device 700 loses power. This prevents an unauthorized party from obtaining any stored decoded or partially decoded information by removing a memory chip from the mobile device 700, for example.

The mobile device 700 may be manually synchronized with a host system by placing the device 100 in an interface cradle, which couples the serial port 730 of the mobile device 700 to the serial port of a computer system or device. The serial port 730 may also be used to enable a user to set preferences through an external device or software application, or to download other application modules 724N for installation. This wired download path may be used to load an encryption key onto the device, which is a more secure method than exchanging encryption information via the wireless network 719. Interfaces for other wired download paths may be provided in the mobile device 700, in addition to or instead of the serial port 730. For example, a USB port would provide an interface to a similarly equipped personal computer.

Additional application modules 724N may be loaded onto the mobile device 700 through the networks 719, through an auxiliary I/O subsystem 728, through the serial port 730, through the short-range communications subsystem 740, or through any other suitable subsystem 742, and installed by a user in the non-volatile memory 724 or RAM 726. Such flexibility in application installation increases the functionality of the mobile device 700 and may provide enhanced on-device functions, communication-related functions, or both. For example, secure communication applications may enable electronic commerce functions and other such financial transactions to be performed using the mobile device 700.

When the mobile device 700 is operating in a data communication mode, a received signal, such as a text message or a web page download, is processed by the transceiver module 711 and provided to the microprocessor 738, which preferably further processes the received signal in multiple stages as described above, for eventual output to the display 722, or, alternatively, to an auxiliary I/O device 728. A user of mobile device 100 may also compose data items, such as e-mail messages, using the keyboard/keypad 732, which is preferably a complete alphanumeric keyboard/keypad laid out in the QWERTY style, although other styles of complete alphanumeric keyboards/keypads such as the known DVORAK style may also be used. User input to the mobile device 700 is further enhanced with a plurality of auxiliary I/O devices 728, which may include a thumbwheel input device, a touchpad, a variety of switches, a rocker input switch, etc. The composed data items input by the user may then be transmitted over the communication networks 719 via the transceiver module 711.

When the mobile device 700 is operating in a voice communication mode, the overall operation of the mobile device is substantially similar to the data mode, except that received signals are preferably be output to the speaker 734 and voice signals for transmission are generated by a microphone 736. Alternative voice or audio I/O subsystems, such as a voice message recording subsystem, may also be implemented on the mobile device 700. Although voice or audio signal output is preferably accomplished primarily through the speaker 734, the display 722 may also be used to provide an indication of the identity of a calling party, the duration of a voice call, or other voice call related information. For example, the microprocessor 738, in conjunction with the voice communication module and the operating system software, may detect the caller identification information of an incoming voice call and display it on the display 722.

A short-range communications subsystem 740 is also included in the mobile device 700. The subsystem 740 may include an infrared device and associated circuits and components, or a short-range RF communication module such as a BluetoothTM module or an 802.11 module, for example, to provide for communication with similarly-enabled systems and devices. It should be appreciated that "Bluetooth" and "802.11" refer to sets of specifications, available from the Institute of Electrical and Electronics Engineers, relating to wireless personal area networks and wireless local area networks, respectively.

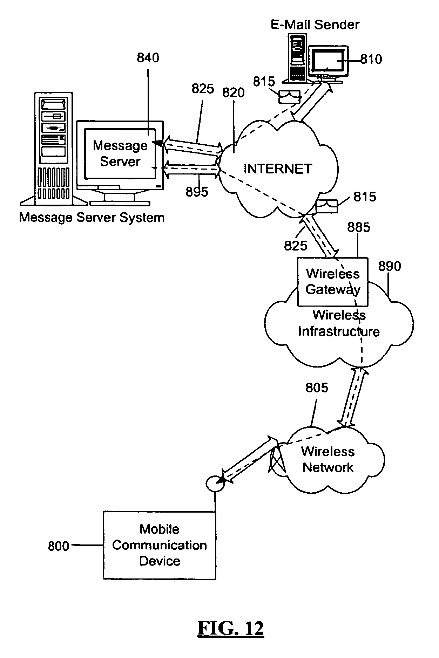

FIG. 12 is an overview of an example communication system in which a mobile device may be used. One skilled in the art will appreciate that there may be hundreds of different topologies, but the system shown in FIG. 12 helps demonstrate the operation of the encoded message processing systems and methods described in the present application. There may also be many message senders and recipients. The simple system shown in FIG. 12 is for illustrative purposes only, and shows perhaps the most prevalent Internet e-mail environment where security is not generally used.

FIG. 12 shows an e-mail sender 810, the Internet 820, a message server system 840, a wireless gateway 885, wireless infrastructure 890, a wireless network 805 and a mobile communication device 800.

An e-mail sender system 810 may, for example, be connected to an ISP (Internet Service Provider) on which a user of the system 810 has an account, located within a company, possibly connected to a local area network (LAN), and connected to the Internet 820, or connected to the Internet 820 through a large ASP (application service provider) such as America Online (AOL). Those skilled in the art will appreciate that the systems shown in FIG. 12 may instead be connected to a wide area network (WAN) other than the Internet, although e-mail transfers are commonly accomplished through Internet-connected arrangements as shown in FIG. 12.

The message server 840 may be implemented, for example, on a network computer within the firewall of a corporation, a computer within an ISP or ASP system or the like, and acts as the main interface for e-mail exchange over the Internet 820. Although other messaging systems might not require a message server system 840, a mobile device 800 configured for receiving and possibly sending e-mail will normally be associated with an account on a message server. Perhaps the two most common message servers are Microsoft Exchange^{™} and Lotus Domino^{™}. These products are often used in conjunction with Internet mail routers that route and deliver mail. These intermediate components are not shown in FIG. 12, as they do not directly play a role in the secure message processing described below. Message servers such as server 840 typically extend beyond just e-mail sending and receiving; they also include dynamic database storage engines that have predefined database formats for data like calendars, to-do lists, task lists, e-mail and documentation.

The wireless gateway 885 and infrastructure 890 provide a link between the Internet 820 and wireless network 805. The wireless infrastructure 90 determines the most likely network for locating a given user and tracks the user as they roam between countries or networks. A message is then delivered to the mobile device 800 via wireless transmission, typically at a radio frequency (RF), from a base station in the wireless network 805 to the mobile device 800. The particular network 805 may be virtually any wireless network over which messages may be exchanged with a mobile communication device.

As shown in FIG. 12, a composed e-mail message 815 is sent by the e-mail sender 810, located somewhere on the Internet 820. This message 815 is normally fully in the clear and uses traditional Simple Mail Transfer Protocol (SMTP), RFC822 headers and Multipurpose Internet Mail Extension (MIME) body parts to define the format of the mail message. These techniques are all well known to those skilled in the art. The message 815 arrives at the message server 840 and is normally stored in a message store. Most known messaging systems support a so-called "pull" message access scheme, wherein the mobile device 800 must request that stored messages be forwarded by the message server to the mobile device 800. Some systems provide for automatic routing of such messages which are addressed using a specific e-mail address associated with the mobile device 800. In a preferred embodiment described in further detail below, messages addressed to a message server account associated with a host system such as a home computer or office computer which belongs to the user of a mobile device 800 are redirected from the message server 840 to the mobile device 800 as they are received.

Regardless of the specific mechanism controlling the forwarding of messages to the mobile device 800, the message 815, or possibly a translated or reformatted version thereof, is sent to the wireless gateway 885. The wireless infrastructure 890 includes a series of connections to wireless network 805. These connections could be Integrated Services Digital Network (ISDN), Frame Relay or T1 connections using the TCP/IP protocol used throughout the Internet. As used herein, the term "wireless network" is intended to include three different types of networks, those being (1) data-centric wireless networks, (2) voice-centric wireless networks and (3) dual-mode networks that can support both voice and data communications over the same physical base stations. Combined dual-mode networks include, but are not limited to, (1) Code Division Multiple Access (CDMA) networks, (2) the Groupe Special Mobile or the Global System for Mobile Communications (GSM) and the General Packet Radio Service (GPRS) networks, and (3) future third-generation (3G) networks like Enhanced Data-rates for Global Evolution (EDGE) and Universal Mobile Telecommunications Systems (UMTS). Some older examples of data-centric network include the Mobitex^{™} Radio Network and the DataTAC^{™} Radio Network. Examples of older voice-centric data networks include Personal Communication Systems (PCS) networks like GSM, and TDMA systems.

The systems and methods may be provided on many different types of computer-readable media including computer storage mechanisms (e.g., CD-ROM, diskette, RAM, flash memory, computer's hard drive, etc.) that contain instructions for use in execution by a processor to perform the methods' operations and implement the systems described herein.

The computer components, software modules, functions and data structures described herein may be connected directly or indirectly to each other in order to allow the flow of data needed for their operations. It is also noted that a module or processor includes but is not limited to a unit of code that performs a software operation, and can be implemented for example as a subroutine unit of code, or as a software function unit of code, or as an object (as in an object-oriented paradigm), or as an applet, or in a computer script language, or as another type of computer code. The software components and/or functionality may be located on a single computer or distributed across multiple computers depending upon the situation at hand.

To further illustrate the broad scope of the disclosed systems and methods, the following is provided. Program code is usually interpreted by software. However, a code processor can be implemented in hardware. Adaptation of the disclosed systems and methods to a hardware processor is within the scope of the invention.

It should be understood that as used in the description herein and throughout the claims that follow, the meaning of "a," "an," and "the" includes plural reference unless the context clearly dictates otherwise. Also, as used in the description herein and throughout the claims that follow, the meaning of "in" includes "in" and "on" unless the context clearly dictates otherwise. Finally, as used in the description herein and throughout the claims that follow, the meanings of "and" and "or" include both the conjunctive and disjunctive and may be used interchangeably unless the context expressly dictates otherwise; the phrase "exclusive or" may be used to indicate situation where only the disjunctive meaning may apply.

## Claims

1. A system for operating upon a mobile communications device (100) for use with data operations with respect to the mobile communications device's memory (140), wherein the memory (140) has sectors (200), in particular erase blocks, the system comprising:
sector header data structures (230) contained in the sectors (200)
and configured to store sector header signature data for use in determining whether a sector (200) contains valid data;
record header data structures (240) contained in the sectors (200), ;
each configured to store record size data and a unique record handle for identifying a record;
a point data store (250) configured to store a mapping between the record handles and addresses of the memory (140);
wherein when a data operation (150) for a record is performed with respect to the memory (140), the mapping from the point data store (250) and data from at least one record header data structure (240) are used in locating the record's address in the memory (140) and performing the data operation (150);
wherein a record header data structure (240) includes a valid field storing information indicative of whether a record is valid, a freed field storing information indicative of whether a record has been freed with respect to the memory (140), a record size field storing information indicative of the size of the record, and a record data field storing the data of the record;
wherein the system is configured, upon initialization of the mobile device,
to initialize the point data store (250) by mapping all record handles to NULL value;
for all sectors (200) that have an invalid sector header-signature data, to erase the sector (200);
for all sectors (200) that have a valid sector header signature data, to traverse the record header data structures (240) until encountering the first invalid record; for each valid record, if the corresponding record handle is mapped to NULL value, to map the corresponding record handle to the address of the memory of the record; else to set the corresponding freed field to TRUE.

2. The system of claim 1, wherein the mobile communications device (100) is a wireless mobile communications device, a personal digital assistant (PDA), cellular phone, or mobile messaging device.

3. The system of claim 1 or 2, wherein the record was generated from interaction with the mobile device's user, or software applications operating on or externally to the mobile device (100).

4. The system of any of claims 1 to 3, wherein the memory (140) is a flash memory device that has an address/data interface to allow random access to a memory location.

5. The system of any of claims 1 to 4, wherein the use of the point data store (250) allows a record to be moved in the memory (140) while maintaining the same unique record handle.

6. The system of claim 5, wherein when a record is moved, the data in the point data store (250) allows the mobile device (100) to locate the address of the record in the memory.

7. The system of any of claims 1 to 6, wherein the sector header data structures (230) include version data associated with the sectors (200).

8. The system of any of claims 1 to 7, wherein a sector header data structure (230) is located at a sector's beginning.

9. The system of claim 8, wherein a record header data structure (240) is located subsequent to a sector header data structure (230).

10. The system of claim 1, wherein for creating a record, a sector (200) is located (302) for the new record;
wherein a new record is created after the end of the last valid record in the located sector (200);
wherein the record size is set (304) in the record header structure such that it is equal to the size of the record to be created;
wherein the record's data is copied (306) into the record data field; wherein the valid field of the record header structure is set (308) to true;
wherein the point data store (250) is updated (310) to indicate the mapping of the record handle to the record's memory address.

11. The system of claim 1, wherein for moving a record, a sector (200) is located (352) for moving the record;
wherein the record size and record handle is set (354, 356) in the new record header structure such that they are respectively equal to the record size and record handle set in the old record header structure;
wherein the record's data is copied (358) into the new record data field;
wherein the valid field of the new record header structure is set (360) to true;
wherein the old record header freed field is set (360) to true;
wherein the point data store (250) is updated (362) to indicate the mapping of the record handle to the record's memory address.

12. The system of claim 1, wherein for freeing a record, the freed field of the record header structure is set (402) to true;
wherein the point data store (250) is updated (404) to indicate the mapping of the record handle to a NULL value.

13. The system of claim 1, wherein for compacting a sector (200) containing records into a clean sector (200), the valid records in the sector (200) to be compacted are traversed (454) and copied (456) to the clean sector (200), whereupon the signature data associated with the new sector (200) is marked (456) as valid, and the old sector (200) is erased (458).

14. The system of claim 1, wherein for erasing a sector (200), the signature data associated with the signature is set (502) to an invalid value and an erase operation is initiated (504) with respect to the sector (200).

15. The system of any of claims 1 to 14, wherein the use of the sector header data structures (230), record header data structures (240) and the point data store (250) in recovery operations allow the memory (140) to recover to a consistent state.

16. The system of claim 15, wherein recovery to a consistent state is achieved despite power failing during a memory modification operation.

17. The system of any of claims 1 to 16, wherein a record comprises a binary data record.

18. A mobile communications device (100) containing a processor for performing data operations (150), comprising a system according to any of claims 1 to 17, with the memory (140) being a data store.

19. A method for use with data operations (150) with respect to a mobile communications device's (100) memory (140), wherein the memory (140) has sectors (200), in particular erase blocks, the method comprising:
providing sector header data structures (230) for the sectors (200);
wherein the sector header data structures (230) are configured to store sector header signature data for use in determining whether a sector contains valid data;
providing record header data structures (240) for the sectors (200),
each configured to store record size data and a unique record handle for identifying a record;
providing a point data store (250) that is configured to store a mapping between the record handles and addresses of the memory (140);
wherein when a data operation (150) for a record is performed with respect to the memory (140), the mapping from the point data store (250) and data from at least one record header data structure (240) are used in locating the record's address in the memory (140) and performing the data operation (150);
wherein a record header data structure (240) includes a valid field storing information indicative of whether a record is valid, a freed field storing information indicative of whether a record has been freed with respect to the memory (140), a record size field storing information indicative of the size of the record, and a record data field storing the data of the record;
wherein upon initialization of the mobile device, the method comprises
initializing the point data store (250) by mapping all record handles to NULL value;
for all sectors (200) that have an invalid sector header signature data, erasing the sector (200);
for all sectors (200) that have a valid sector header signature data, traversing the record header data structures (240) until encountering the first invalid record; for each valid record, if the corresponding record handle is mapped to NULL value, mapping the corresponding record handle to the address of the memory of the record; else setting the corresponding freed field to TRUE.

## Patentansprüche

1. System zum Betrieb auf einer mobilen Kommunikationsvorrichtung (100) zur Verwendung mit Datenoperationen in Bezug auf einen Speicher (140) der mobilen Kommunikationsvorrichtung, wobei der Speicher (140) Sektoren (200) hat, insbesondere Lösch-Blöcke, wobei das System aufweist Sektor-Header-Datenstrukturen (230), die in den Sektoren (200) enthalten sind und konfiguriert sind zum Speichern von Sektor-Header-Signaturdaten zur Verwendung bei einem Bestimmten, ob ein Sektor (200) gültige Daten enthält;
Datensatz -Header-Datenstrukturen (240), die in den Sektoren (200) enthalten sind,
die jeweils konfiguriert sind zum Speichern von Datensatzgröße-Daten und eines eindeutigen Datensatz-Handles zum Identifizieren eines Datensatzes; einen Zeigerdatenspeicher (250), der konfiguriert ist zum Speichern einer Zuordnung zwischen den Datensatz-Handles und Adressen des Speichers (140);
wobei, wenn eine Datenoperation (150) für einen Datensatz in Bezug auf den Speicher (140) durchgeführt wird, die Zuordnung von dem Zeigerdatenspeicher (250) und Daten von zumindest einer Datensatz-Header-Datenstruktur (240) verwendet werden bei einer Suche der Adresse des Datensatzes in dem Speicher (140) und einem Durchführen der Datenoperation (150);
wobei eine Datensatz-Header-Datenstruktur (240) ein "gültig"-Feld umfasst, das Information speichert, die anzeigt, ob ein Datensatz gültig ist, ein "freigegeben"-Feld, das information speichert, die anzeigt, ob ein Datensatz freigegeben wurde in Bezug auf den Speicher (140), ein Datensatzgröße-Feld, das Information speichert, die die Größe des Datensatzes anzeigt, und ein Datensatz-Daten-Feld, das die Daten des Datensatzes speichert; wobei das System konfiguriert ist, bei Initialisierung der mobilen Vorrichtung,
den Zeigerdatenspeicher (250) zu initialisieren durch Zuordnen aller Datensatz-Handles zu einem NULL-Wert;
für alle Sektoren (200), die ungültige Sektor-Header-Signaturdaten haben, den Sektor (200) zu löschen;
für alle Sektoren (200), die gültige Sektor-Header-Signaturdaten haben, die Datensatz-Header-Datenstrukturen (240) zu durchlaufen bis zu dem ersten ungültigen Datensatz; für jeden gültiges Datensatz, wenn das entsprechende Datensatz-Handle einem NULL-Wert zugeordnet ist, das entsprechende Datensatz-Handle der Adresse des Speichers des Datensatzes zuzuordnen; ansonsten, das entsprechende "freigegeber)"-Feld auf TRUE bzw. WAHR zu setzen.

2. System Anspruch 1, wobei die mobile Kommunikationsvorrichtung (100) eine drahtlose mobile Kommunikationsvorrichtung, ein PDA (Personal Digital Assistant), ein zellulares Telefon oder eine mobile Messaging-Vorrichtung ist.

3. gemäß Anspruch 1 oder 2, wobei der Datensatz erzeugt wurde aus einer Interaktion mit dem Benutzer der mobilen Vorrichtung oder aus Saftware-Anwendungen, die auf oder extern zu der mobilen Vorrichtung (100) arbeiten.

4. System gemäß einem der Ansprüche 1 bis 3, wobei der Speicher (140) eine Flash-Speicher-Vorrichtung ist, die eine Adresse/Daten-Schnittstelle hat, um einen wahlfreien Zugriff auf einen Speicherort zu ermöglichen.

5. System gemäß einem der Ansprüche 1 bis 4, wobei die Verwendung des Zeigerdatenspeichers (250) ermöglicht, dass ein Datensatz in dem Speicher (140) verschoben wird unter Beibeihaltung desselben eindeutigen Datensatz-Handles.

6. System Anspruch 5, wobei, wenn ein Datensatz verschoben wird, die Daten in dem Zeigerdatenspeicher (250) der mobilen Vorrichtung (100) ermöglichen, die Adresse des Datensatzes in dem Speicher zu lokalisieren.

7. System gemäß einem der Ansprüche 1 bis 6, wobei die Sektor-Header-Datenstrukturen (230) Versionsdaten umfassen, die mit den Sektoren (200) assoziiert sind.

8. System gemäß einem der Ansprüche 1 bis 7, wobei sich eine Sektor-Header-Datenstruktur (230) am Anfang eines Sektors befindet.

9. System gemäß Anspruch 8, wobei sich eine Datensatz-Header-Datenstruktur (240) anschließend an eine Sektor-Header-Datenstruktur (230) befindet.

10. System gemäß Anspruch 1, wobei zum Erzeugen eines Datensatzes ein Sektor (200) für den neuen Datensatz lokalisiert wird (302);
wobei ein neuer Datensatz wird nach dem Ende des letzte gültigen Datensatzes in dem lokalisierten Sektor (200);
wobei die Datensatzgröße in der Datensatz-Header-Struktur derart gesetzt wird (304), dass sie gleich der Größe des zu erzeugenden Datensatzes ist, wobei die Daten des Datensatzes in das Datensatz-Datenfeld kopiert werden (306);
wobei das "gültig"-Feld der Datensatz-Header-Struktu auf "wahr" gesetzt wird (308);
wobei der Zeigerdatenspeicher (250) aktualisiert wird (310), um die Zuordnung des Datensatz-Handle zu der Speicheradresse des Datensatzes anzuzeigen.

11. System gemäß Anspruch 1, wobei zum Verschieben eines Datensatzes ein Sektor (200) lokalisiert wird (352) zum Verschieben des Datensatzes; wobei die Datensatzgröße und das Datensatz-Handle in der neuen Datensatz-Header-Struktur derart gesetzt werden (354, 356), dass sie jeweils gleich der Datensatzgröße und des Datensatz-Handies in der alten Datensatz-Header-Struktur sind;
wobei die Daten des Datensatzes in das Datensatz-Datenfetd kopiert werden (358);
wobei das "gültig"-Feld der neuen Datensatz-Header-Struktur auf "wahr" gesetzt wird (360);
wobei das "freigegeben"-Feld des alten Datensatz-Headers auf "wahr" gesetzt wird (360);
wobei der Zeigerdatenspeicher (250) aktualisiert wird (362), um die Zuordnung des Datensatz-Handles zu der Speicheradresse des Datensatzes anzuzeigen.

12. System Anspruch 1, wobei für die Freigabe eines Datensatzes das "freigegeben"-Feid der Datensatz-Header-Struktur auf wahr gesetzt wird (402);
wobei der Zeigerdatenspeicher (250) aktualisiert wird (404), um die Zuordnung des Datensatz-Handies zu einem NULL-Wert anzuzeigen.

13. System gemäß Anspruch 1, wobei zum Kompaktieren eines Sektors (200), der Datensätze enthält, in einen leeren Sektor (200), die "gültig"-Datensätze in dem zu kompaktierenden Sektor (200) durchlaufen werden (454) und in den leeren Sektor (200) kopiert werden (456), worauf die Signaturdaten, die mit dem neuen Sektor (200) assoziiert sind, als gültig markiert werden (456) und der alte Sektor (200) gelöscht wird (458).

14. System gemäß Anspruch 1, wobei für das Löschen eines Sektors (200) die Signaturdaten, die mit der Signatur assoziiert sind, auf einen ungültigen Wort gesetzt werden (502) und eine Löschoperation initiiert wird (504) in Bezug auf den Sektor (200).

15. System gemäß einem der Ansprüche 1 bis 14, wobei die Verwendung der Sektor-Header-Datenstrukturen (230), Datensatz-Header-Datenstrukturen (240) und des Zeigerdatenspeichers (250) bei Wiederherstellungsoperationen dem Speicher (140) ermöglichen, in einen konsistenzen Zustand wiederhergestellt zu werden.

16. System gemäß Anspruch 15, wobei eine Wiederherstellung in einen konsistenten Zustand erreicht wird trotz eines Stromausfalls während einer Speicher-Modifikationsoperation.

17. System gemäß einem der Ansprüche 1 bis 16, wobei ein Datensatz einen binären Daten-Datensatz aufweist.

18. Mobile Kommunikationsvorrichtung (100) mit einem Prozessor zum Durchführten von Datenoperationen (150), die ein System gemäß einem der Ansprüche 1 bis 17 aufweist, wobei der Speicher (140) ein Datenspeicher ist.

19. Verfahren zur Verwendung mit Datenoperationen (150) in Bezug auf einen Speicher (140) einer mobilen Kommunikationsvorrichtung (100), wobei der Speicher (140) Sektoren (200) hat, insbesondere Lösch-Blöcke, wobei das Verfahren aufweist:
Vorsehen von Sektor-Header-Datenstrukturen (230) für die Sektoren (200);
wobei die Sektor-Header-Datenstrukturen (230) konfiguriert sind zum Speichern von Sektor-Header-Signaturdaten zur Verwendung bei einem Bestimmen, ob ein Sektor gültige Daten enthält;
Vorsehen von Datensatz-Header-Datenstrukturen (240) für die Sektoren (200), die jeweils konfiguriert sind zum Speichern von Datensatzgröße-Daten und eines eindeutigen Datensatz-Handles zum identifizieren eines Datensatzes;
Vorsehen eines Zeigerdatenspeichers (250), der konfiguriert ist zum Speichern einer Zuordnung zwischen den Datensatz-Handies und Adressen des Speichers (140);
wobei, wenn eine Datenoperation (150) für einen Datensatz in Bezug auf den Speicher (140) durchgeführt wird, die Zuordnung von dem Zeigerdatenspeicher (250) und Daten von zumindest einer Datensatz-Header-Datenstruktur (240) verwendet werden bei einer Suche der Adresse des Datensatzes in dem Speicher (140) und Durchführen der Datenoperation (150);
wobei eine Datensatz-Header-Datenstruktur(240) ein "gültig"-Feld umfasst, das Information speichel, die anzeigt, ob ein Datensatz gültig ist, ein "freigegeben"-Feld, das Information speichert, die anzeigt, ob ein Datensatz freigegeben wurde in Bezug auf den Speicher (140), ein Datensatzgröße-Feld, das Information speichert, die die Größe des Datensatzes anzeigt, und ein Datensatz-Daten-Feld, das die Daten des Datensatzes speichert;
wobei bei Initialisierung der mobilen Vorrichtung das Verfahren aufweiset ein Initialisieren des Zeigerdatenspeichers (250) durch Zuordnen aller Datensatz-Handies zu einem NULL-Wert;
für alle Sektoren (200), die ungultige Sektor-Header-Signaturdaten haben, Löschen des Sektors (200);
für alle Sektoren (200), die gültige Sektor-Header-Signaturdaten haben, Durchlaufen der Datensatz-Header-Datenstrukturen (240) bis zu dem ersten ungültigen Datensatz; für jeden gültigen Datensatz, wenn das entsprechende Datensatz-Handle einem NULL-Wert zugeordnet ist, Zuordnen des entsprechenden Datensatz-Handtes zu der Adresse des Speichers des Datensatzes; ansonsten, Setzen des entsprechenden "freigegeben"-Felds auf TRUE bzw. ZUTREFFEND.

## Revendications

1. Système destiné à fonctionner sur un dispositif de communication mobile (100) afin d'être utilise pour des opérations de données intéressant la mémoire (140) du dispositif de communications mobile, la mémoire (140) comportant des secteurs (200), en particulier des blocs d'effacement, le système comprenant :
des structures de données pour en-tête de secteur (230), contenues dans les secteurs (200) et configurées pour stocker des données de signature d'en-tête de secteur, destinées à être utilisées pour déterminer si un secteur (200) contient des données valides ;
des structures de données pour en-tête d'enregistrement (240), contenues dans les secteurs (200), chacune étant configurée pour stocker des données de taille d'enregistrement et une référence unique d'enregistrement destinée à identifier un enregistrement ;
une mémoire de données de pointage (250), configurée pour stocker une correspondance entre les références d'enregistrements et les adresses dans la mémoire (140) ;
dans lequel, lorsqu'une opération de données (150) est effectuée pour un enregistrement dans la mémoire (140), la correspondance provenant de la mémoire de données de pointage (250) et des données provenant d'au moins une structure de données pour en-tête d'enregistrement (240) sont utilisées pour localiser l'adresse de l'enregistrement dans la mémoire (140) et pour effectuer l'opération de données (150) ;
dans lequel une structure de données pour en-tête d'enregistrement (240) comprend un champ de validité qui stocke des informations indiquant si un enregistrement est validé, un champ de libération qui stocke des informations indiquant si un enregistrement a été libéré dans la mémoire (140), un champ de taille d'enregistrement qui stocke des informations indiquant la taille de l'enregistrement, et un champ de données d'enregistrement qui stocke les données de l'enregistrement ;
le système étant configuré pour, après initialisation du dispositif mobile :
initialiser la mémoire de données de pointage (250) en faisant correspondre toutes les références d'enregistrement à une valeur NULL ;
effacer le secteur (200) pour tous les secteurs (200) qui possèdent des données de signature d'en-tête de secteur qui sont invalides ;
pour tous les secteurs (200) qui possèdent des données de signature d'en-tête de secteur qui sont valides, arpenter les structures de données pour en-tête d'enregistrement (240) jusqu'à trouver le premier enregistrement invalide ;
pour chaque enregistrement valide, si la référence d'enregistrement correspondante est mise en correspondance avec la valeur NULL, faire correspondre la référence d'enregistrement correspondante avec l'adresse de la mémoire de l'enregistrement ; et sinon renseigner à la valeur VRAI (TRUE) le champ de libération correspondant.

2. Système selon la revendication 1, dans lequel le dispositif de communication mobile (100) est un dispositif de communication mobile sans fil, un assistant numérique personnel, un téléphone cellulaire ou un dispositif mobile de messagerie.

3. Système selon la revendication 1 ou 2, dans lequel l'enregistrement a été produit dans une interaction avec l'utilisateur du dispositif mobile ou par des applications logicielles s'exécutant sur le dispositif mobile (100) ou extérieurement.

4. Système selon l'une quelconque des revendications 1 à 3, lequel la mémoire (140) est un dispositif de mémoire flash qui possède une interface d'adresses/de données pour permettre un accès direct à un emplacement de la mémoire.

5. Système selon l'une quelconque des revendications 1 à 4, dans lequel l'utilisation de la mémoire de données de pointage (250) permet de déplacer un enregistrement dans la mémoire (140) tout en conservant la même référence d'enregistrement unique.

6. Système selon la revendications 5, dans lequel, lorsqu'un enregistrement est déplacé, les données se trouvant dans la mémoire de données de pointage (250) permettent au dispositif mobile (100) de localiser l'adresse de l'enregistrement dans la mémoire.

7. Système selon l'une quelconque des revendications 1 à 6, dans lequel les structures de données pour en-tête de secteur (230) comprennent des données de version associées aux secteurs (200).

8. Système selon l'une quelconque des revendications 1 à 7, dans lequel une structure de données pour en-tête de secteur (230) est située au début d'un secteur.

9. Système selon la revendication 8, dans lequel une structure de données pour en-tête d'enregistrement (240) est située après une structure de données pour en-tête de secteur (230).

10. Système selon la revendication 1, dans lequel, afin de créer un enregistrement, un secteur (200) est localisé (302) pour le nouvel enregistrement ;
dans lequel un nouvel enregistrement est créé après la fin du dernier enregistrement valide dans le secteur (200) localisé ;
dans lequel la taille de l'enregistrement est renseignée (304) dans la structure d'en-tête d'enregistrement de telle sorte qu'elle soit égale à la taille de l'enregistrement à créer ;
dans lequel les données de l'enregistrement sont copiées (306) dans le champ de données de l'enregistrement ;
dans lequel le champ de validité de la structure d'en-tête d'enregistrement est renseigné (308) à la valeur VRAI (TRUE) ;
dans lequel la mémoire de données de pointage (250) est mise à jour (310) afin d'indiquer la correspondance entre la référence d'enregistrement et l'adresse de l'enregistrement en mémoire.

11. Système selon la revendication 1, dans lequel, afin de déplacer un enregistrement, un secteur (200) est localisé (352) pour déplacer l'enregistrement ;
dans lequel la taille de l'enregistrement et la référence de l'enregistrement sont renseignées (354, 356) dans la nouvelle structure d'en-tête d'enregistrement, afin qu'elles soient égalés, respectivement, à la taille d'enregistrement et à la référence d'enregistrement se trouvant dans l'ancienne structure d'en-tête d'enregistrement ;
dans lequel les données de l'enregistrement sont copiées (358) dans le nouveau champ de données de l'enregistrement ;
dans lequel le champ de validité de la nouvelle structure d'en-tête d'enregistrement est renseigné (360) à la valeur VRAI (TRUE) ;
dans lequel le champ de libération de l'ancien en-tête d'enregistrement est renseigné (360) à la valeur VRAI (TRUE) ;
dans lequel la mémoire de données de pointage (250) est mise à jour (362) afin d'indiquer la correspondance entre la référence d'enregistrement et l'adresse de l'enregistrement en mémoire.

12. Système selon la revendication 1, dans lequel, afin de libérer un enregistrement, le champ de libération de la structure d'en-tête d'enregistrement est renseigné (402) à à la valeur VRAI (TRUE) ;
dans lequel la mémoire de données de pointage (250) est misse à jour (404) pour indiques une correspondance entre la référence d'enregistrement et la valeur NULL.

13. Système selon la revendication 1, dans lequel, afin de compacter un secteur (200) contenant des enregistrements dans un secteur vide (200), les enregistrements valides du secteur (200) à compacter sont arpentés (454) et copiés (456) vers le secteur vide (200), après quoi les données de signature associées au nouveau secteur (200) sont marquées (456) comme valides et l'ancien secteur (200) est effacé (458).

14. Système selon la revendication 1, dans lequel, afin d'effacer un secteur (200), les données de signature associées à la signature sont renseignées (502) à une valeur invalide et une opération d'effacement est lancée (504) sur le secteur (200).

15. Système selon l'une quelconque des revendications 1 à 14, dans lequel l'utilisation des structures de données pour en-tête de secteur (230), des structures de données pour en-tête d'enregistrement (240) et de la mémoire de données de pointage (250), dans les opérations de récupération, permettent de replacer la mémoire (140) dans un état cohérent.

16. Système selon la revendication 15, dans lequel le replacement dans une état cohérent est réalisé malgré une panne d'alimentation pendant opération de modification de la mémoire.

17. Système selon l'une quelconque des revendications 1 à 16, dans lequel un enregistrement est constitué d'un enregistrement de données binaires.

18. Dispositif de communications mobile (100) contenant un processeur destiné à effectuer des opérations de données (150), comprenant un système selon l'une quelconque des revendications 1 à 17, la mémoire (140) étant une mémoire de données.

19. Procédé destiné à être utilise dans des opérations de données (150) intéressant la mémoire (140) d'un dispositif de communication mobile (100), la mémoire (140) possédant des secteurs (200), en particulier des blocs d'effacement, le procédé comprenant les étapes consistant à :
fournir des structures de données pour en-tête de secteur (230) pour les secteurs (200) ;
les structures de données pour en-tête de secteur (230) étant configurées pour stocker des données de signature d'en-tête de secteur, destinées à être utilisées pour déterminer si un secteur contient des données valides ;
fournir des structures de données pour en-têtue d'enregistrement (240) pour les secteurs (200) ;
chacune étant configurée pour stocker des données de taille d'enregistrement et une référence unique d'enregistrement destinée à identifier un enregistrement ;
fournir une mémoire de données de pointage (250), configurée pour stocker une correspondance entre les références d'enregistrements et les adresses dans la mémoire (140) ;
dans lequel, lorsqu'une opération de données (150) est effectuée pour un enregistrement dans la mémoire (140), la correspondance provenant de la mémoire de données de pointage (250) et des données provenant d'au moins une structure de données pour en-tête d'enregistrement (240) sont utilisées pour localiser l'adresse de l'enregistrement dans la mémoire (140) et pour effectuer l'opération de données (150) ;
dans lequel une structure de données pour en-tête d'enregistrement (240) comprend un champ de validité qui stocke des informations indiquant si un enregistrement est validé, un champ de libération qui stocke des informations indiquant si un enregistrement a été libéré dans la mémoire (140), un champ de taille d'enregistrement qui stocke des informations indiquant la taille de l'enregistrement, et un champ de données d'enregistrement qui stocke les données de l'enregistrement ;
dans lequel, après initialisation du dispositif mobile, le procédé comprend les étapes consistant à :
initialiser la mémoire de données de pointage (250) en faisant correspondre toutes les références d'enregistrement à une valeur NULL ;
effacer le secteur (200) pour tous les secteurs (200) qui possèdent des données de signature d'en-tête de secteur qui sont invalides ;
pour tous les secteurs (200) qui possèdent des données de signature d'en-tête de secteur qui sont valides, arpenter les structures de données pour en-tête d'enregistrement (240) jusqu'à trouver le premier enregistrement invalide ;
pour chaque enregistrement valide, si la référence d'enregistrement correspondante est mise en correspondance avec la valeur NULL, faire correspondre la référence d'enregistrement correspondante avec l'adresse de la mémoire de l'enregistrement ; et sinon renseigner à la valeur VRAI (TRUIE) le champ de libération correspondant.
